Europäisches Patentamt

European Patent Office

Office européen des brevets

(11) Publication number: **0 042 761**
**B1**

(19)

# EUROPEAN PATENT SPECIFICATION

(12)

(45) Date of publication of patent specification: **18.12.85**

(51) Int. Cl.⁴: **B 60 K 5/12, F 16 F 9/10**

(21) Application number: **81302823.0**

(22) Date of filing: **23.06.81**

(54) Rubber vibration isolator.

(30) Priority: **23.06.80 JP 84773/80**
**12.07.80 JP 94565/80**

(43) Date of publication of application:
**30.12.81 Bulletin 81/52**

(45) Publication of the grant of the patent:
**18.12.85 Bulletin 85/51**

(84) Designated Contracting States:
**DE FR GB IT**

(56) References cited:
**EP-A-0 009 120**
**EP-A-0 012 638**
**FR-A-2 255 507**
**FR-A-2 394 715**
**US-A-2 502 322**
**US-A-2 919 883**
**US-A-3 101 937**
**US-A-3 612 506**

(73) Proprietor: **BRIDGESTONE TIRE COMPANY
LIMITED**
**10-1, Kyobashi 1-Chome Chuo-Ku
Tokyo (JP)**

(72) Inventor: **Dan, Takuya**
**936, Matsumi-Cho 3-Chome
Kanagawa-Ku Yokohama City (JP)**
Inventor: **Fujita, Akio**
**3-16-403, Tsunashima-Nishi 5-Chome
Kohoku-Ku Yokohama City (JP)**

(74) Representative: **Whalley, Kevin et al
Marks & Clerk 57/60 Lincoln's Inn Fields
London WC2A 3LS (GB)**

Courier Press, Leamington Spa, England.

## Description

This invention relates to a rubber vibration isolator, and more particularly to a rubber vibration isolator having an improved hydraulic damping performance, which is suitable for use in for example an engine mounting serving to support a power unit of a motor vehicle.

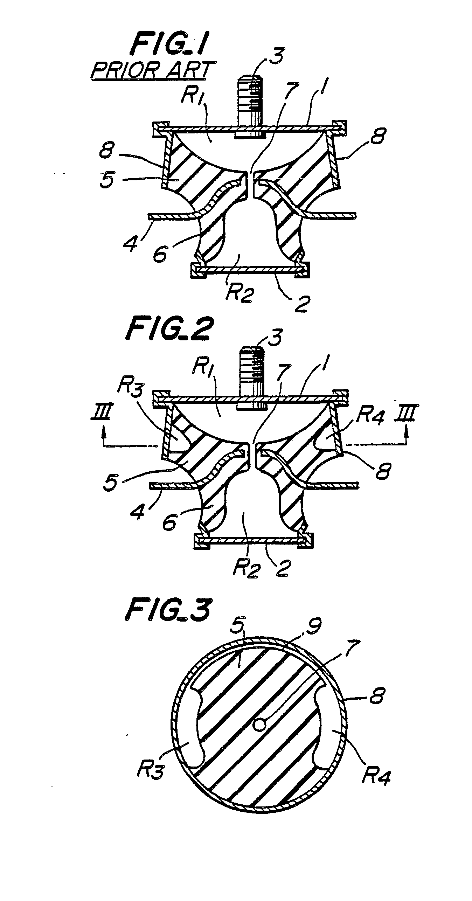

Rubber vibration isolators for use in engine mountings have lately utilized the damping action of a liquid. An example of such a conventional rubber vibration isolator is shown in Figure 1 of the accompanying drawings, which is a longitudinal sectional view of a conventional rubber vibration isolator, wherein upper and lower parts 5, 6 of an annular rubber elastomer divided by a supporting plate 4 embedded therein are arranged between a pair of upper and lower plates 1, 2 to define a chamber. The upper plate 1 is provided with a stud 3 for supporting a vibrating body such as a power unit, while the supporting plate 4 is secured to a vehicle body. Further, the chamber is divided into upper and lower chambers $R_1$, $R_2$ communicating with each other through an orifice or other restricted passage 7, which is formed by pushing out the rubber elastomer toward the center thereof so as to approximately equally divide the hollow chamber into two parts. In each of these chambers $R_1$, $R_2$ is filled an incompressible liquid such as water. In Figure 1, reference numeral 8 designates an outer sleeve.

In the rubber vibration isolator having the above-mentioned structure, the damping effect of the liquid is developed by the cooperation of the upper and lower chambers $R_1$, $R_2$ with the orifice 7 against only the up and down vibration or longitudinal vibration. In fact, the engine mounting is also affected by a lateral vibration in addition to the simple longitudinal vibration. However, the conventional rubber vibration isolator cannot provide hydraulic damping against the lateral direction.

It is therefore an object of the present invention to overcome the aforementioned drawback of the prior art by providing a rubber vibration isolator which can effectively perform hydraulic damping against both longitudinal and lateral vibrations.

We are aware of EP—A—9120, which discloses a rubber vibration isolator comprising a pair of upper and lower liquid-containing chambers 33, 34 (Figure 13) capable of undergoing change in their volume by elastic deformation of an annular rubber elastomer 27 upon longitudinal vibration. A restricted passage 38 provides communication between the chambers 33, 34. Two further liquid containing chambers 28 capable of undergoing change in their volumes upon lateral vibration are formed in the outer periphery of the rubber elastomer (Figures 13 and 14) and communicate with each other through another restricted passage 32. Each of the restricted passages 38, 32 is defined by a rigid material (Figures 13—15). The chambers 28, 33, 34 are filled with an incompressible liquid.

According to the present invention, there is provided a rubber vibration isolator comprising a first rigid member with an annular wall and a cover, a second rigid member defining a second cover, and an annular rubber elastomer connecting the annular wall with the second rigid member, a first liquid containing chamber being enclosed by the two covers and the annular rubber elastomer, a second liquid containing chamber being enclosed by a rubber body and communicating with the first chamber through a first restricted passage in one of the covers, wherein the outer periphery of the annular rubber elastomer contains recessions forming, together with the annular wall, at least two further liquid containing chambers communicating with each other through a second restricted passage.

The invention will be further described, by way of example only, with reference to the accompanying drawings, wherein:

Figure 2 is a longitudinal sectional view of one embodiment of a rubber vibration isolator according to the invention;

Figure 3 is a transverse sectional view taken along the line III—III of Figure 2;

Figure 4 is a longitudinal sectional view of another embodiment of a rubber vibration isolator according to the invention;

Figure 5 is a longitudinal sectional view taken along the line V—V of Figure 4;

Figure 6 is a transverse sectional view taken along the line VI—VI of Figure 4;

Figure 7 is a longitudinal sectional view of a further embodiment of a rubber vibration isolator according to the invention; and

Figures 8 and 9 are longitudinal sectional views of a still further embodiment of a rubber vibration isolator according to the invention, respectively.

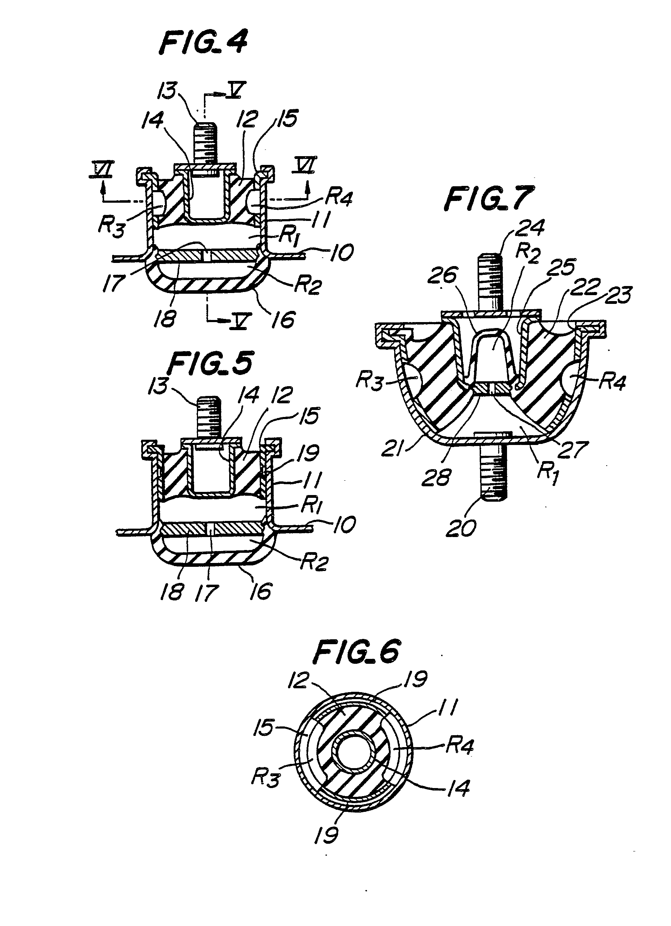

The rubber vibration isolator shown in Figures 2 and 3 has the same general structure as that shown in Figure 1, wherein like reference numerals and symbols indicate like parts; in particular a chamber is formed by arranging upper and lower parts 5, 6 of an annular rubber elastomer between a pair of upper and lower rigid plates 1, 2, which chamber is divided into upper and lower chambers $R_1$, $R_2$ by an orifice 7 communicating therebetween, and the chambers $R_1$, $R_2$ are filled with incompressible liquid. According to the invention, however, two liquid-containing chambers $R_3$, $R_4$ are further formed in the outer periphery of the upper part 5 of the annular rubber elastomer at symmetrical positions in the circumferential direction thereof and communicate with each other through an orifice or other restricted passage 9 as shown in Figure 3.

In the rubber vibration isolator having the above described structure as illustrated, longitudinal vibration is damped by hydraulic damping action based on flowing of the liquid between the chambers $R_1$ and $R_2$ through the orifice 7, while lateral vibration is damped by hydraulic damping action based on flowing of the liquid between the chambers $R_3$ and $R_4$ through the orifice 9. Moreover, the hydraulic damping action against the lateral vibration produces anisotropy by the arrangement of the liquid chambers $R_3$, $R_4$, but in this case such anisotropy can be considerably mitigated, for example by biasing the relation in position between the chambers $R_3$ and $R_4$, or by providing an additional liquid chamber at the middle position of the orifice 9.

In the illustrated embodiment, the upper and lower chambers $R_1$, $R_2$ and the left and right chambers $R_3$, $R_4$ communicate only through the separate orifices 7 and 9 respectively, but it is a matter of course that these chambers may communicate with each other through orifices, if necessary.

In Figures 4, 5 and 6 is shown another embodiment of a rubber vibration isolator according to the invention, wherein an annular rubber elastomer 12 is received in an outer sleeve 11 provided with an annular outer flange 10 extending radially from the sleeve and being secured to a vehicle body, while a cup-shaped inner sleeve 14 provided with a stud 13 for supporting a vibrating body is forced into the elastomer 12. In this case, an annular body 15 is integrally bonded by vulcanization to the outer periphery of the elastomer 12 and fitted into the outer sleeve 11. Further, a bag-like rubber body 16 is extended around the lower end of the outer sleeve 11 to define a chamber together with the outer sleeve, annular rubber elastomer, annular body and inner sleeve. This chamber is divided into upper and lower liquid-containing chambers $R_1$, $R_2$ by adheringly joining a plate 18 provided with an orifice 17 to the inner periphery of the outer sleeve 11 near the flange part thereof through the rubber body 16. In addition, left and right liquid-containing chambers $R_3$, $R_4$ are formed in the outer periphery of the rubber elastomer 12 and the body 15 at given positions and communicate with each other through orifices 19 formed in the outer periphery of the body 15 as shown in Figures 5 and 6.

In this embodiment, the performance of the rubber vibration isolator is the same as that shown in Figure 2. In particular, the orifice 19 between the chambers $R_3$, $R_4$ is formed as a groove in the ring body 15 and is limited by the inner periphery of the outer sleeve 11, so that there is no deviation in the channel sectional area and length of the orifice 19 and consequently the lateral damping performance can be reliably developed.

In Figure 7 is shown a further embodiment of the rubber vibration isolator according to the invention, wherein an annular rubber elastomer 22 is received in a cup-shaped rigid body 21 provided at its bottom with a stud 20 to be secured to a vehicle body. In this case, an annular body 23 is integrally bonded by vulcanization to the outer periphery of the rubber elastomer 22 and fitted into the rigid body 21 in the same manner as described in Figure 4. Further, an inner sleeve 25 provided at its top with a stud 24 to be secured to a vibrating body is forced into the inner periphery of the rubber elastomer 22, and also a bag-like rubber body 26 is arranged inside the inner sleeve 25 and integrally bonded thereto (in the illustrated embodiment the rubber body 26 is integrally bonded to a part of the rubber elastomer 22). A chamber defined by the rubber body 26, the rubber elastomer 22 and the rigid body 21 is divided into upper and lower liquid-containing chambers $R_1$, $R_2$ by fitting a plate 28 provided with an orifice 27 to the inner periphery of the inner sleeve 25 near the lower end thereof so that these chambers communicate with each other through the orifice 27. In addition, further liquid-containing chambers $R_3$, $R_4$, . . . are formed in the outer periphery of the rubber elastomer 22 and the body 23 at given positions and communicate with each other through an orifice (not shown) having the same structure as shown in Figures 5 and 6.

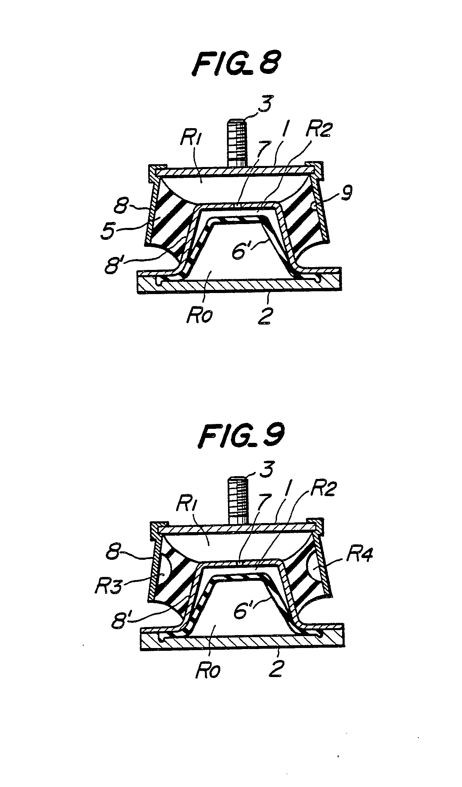

In Figures 8 and 9 is shown a preferred embodiment of a rubber vibration isolator utilizing a hydraulic damping performance. In this case, an outer sleeve 8 and an inner sleeve 8′ are secured to outer and inner peripheral surfaces of an annular rubber elastomer 5, respectively. The inner sleeve 8′ has an inverted cup shape, the base of which is provided with an orifice 7. The rubber elastomer 5 and the inner sleeve 8′ form an upper liquid-containing chamber $R_1$ with an upper rigid plate 1 secured to the outer sleeve 8. Inside the inner sleeve 8′ is arranged an inverted cup-shaped rubber body 6′ to define a lower liquid-containing chamber $R_2$, and its lower end is secured to the inner sleeve 8′ by means of a lower rigid plate 2. Moreover, a pressurized gas is enclosed in a closed space $R_0$ defined between the rubber body 6′ and the lower plate 2, whereby a favourable damping performance can be further developed. That is, in the rubber vibration isolator of Figures 8 and 9 the rubber body 6′ functions toward its folding direction without being subjected to tension under vibration loading.

As shown in Figure 9, further liquid-containing chambers $R_3$, $R_4$ are formed in the outer periphery of the rubber elastomer 5 facing the outer sleeve 8 and communicate with each other through an orifice (numeral 9 in Figure 8) in the same manner as previously described.

According to this illustrated embodiment, both the longitudinal and lateral damping performances are simultaneously developed. Also, even if the rubber body 6′ is broken down, the liquid filled in the liquid chambers $R_1$, $R_2$ flows only into the hollow space $R_0$ and never leaks out of the liquid chamber. In this case, the vibration loading can be borne by only the rubber elastomer 5. Therefore, the rubber vibration isolator of Figures 8 and 9 provides excellent security.

As explained above, the rubber vibration isolator according to the invention makes it possible to develop proper damping performance against both longitudinal and lateral vibrations and is very wide in its application range.

**Claims**

1. A rubber vibration isolator comprising a first rigid member (1, 8; 11, 18; 21) with an annular wall (8, 11) and a cover (1; 18), a second rigid member (4; 8', 14; 25, 28) defining a second cover, and an annular rubber elastomer (5; 12; 22) connecting the annular wall (8, 11) with the second rigid member (4; 8'; 14; 25, 28), a first liquid containing chamber ($R_1$) being enclosed by the two covers and the annular rubber elastomer (5; 12; 22), a second liquid containing chamber ($R_2$) being enclosed by a rubber body (6'; 16; 26) and communicating with the first chamber ($R_1$) through a first restricted passage (7; 17; 27) in one of the covers, characterized in that the outer periphery of the annular rubber elastomer (5; 12; 22) contains recessions forming, together with the annular wall (8, 11), at least two further liquid containing chambers ($R_3$, $R_4$) communicating with each other through a second restricted passage (9; 19).

2. A rubber vibration isolator as claimed in claim 1, characterized in that the said liquid-containing chambers are filled with an incompressible liquid.

## Revendications

1. Isolateur de vibrations en caoutchouc comprenant un premier organe rigide (1, 8; 11, 18; 21) présentant une paroi annulaire (8, 11) et un couvercle (1; 18), un second organe rigide (4; 8', 14; 25, 28) définissant un second couvercle, et un élastomère annulaire en caoutchouc (5; 12; 22) reliant la paroi annulaire (8, 11) au second organe rigide (4; 8'; 14; 25, 28), une première chambre ($R_1$) contenant du liquide étant enfermée par les deux couvercles et par l'élastomère annulaire en caoutchouc (5; 12; 22), une seconde chambre ($R_2$) contenant du liquide étant enfermée par un corps en caoutchouc (6'; 16; 26) et communiquant avec la première chambre ($R_1$) à travers un premier passage étranglé (7; 17; 27) ménagé dans l'un des couvercles, caractérisé en ce que le pourtour extérieur de l'élastomère annulaire en caoutchouc (5; 12; 22) présente des parties en creux formant, avec la paroi annulaire (8, 11), au moins deux autres chambres ($R_3$, $R_4$), contenant du liquide, communiquant l'une avec l'autre à travers un second passage étranglé (9; 19).

2. Isolateur de vibrations en caoutchouc selon la revendication 1, caractérisé en ce que lesdites chambres contenant du liquide sont remplies d'un liquide incompressible.

## Patentansprüche

1. Schwingungsisolierende Vorrichtung aus einem ersten starren Bauteil (1, 8; 11, 18, 21) mit einer ringförmigen Wand (8, 11) und einer Platte (1; 18), einem zweiten starren Bauteil (4; 8', 14; 25, 28) mit einer zweiten Platte und einem ringförmigen Gummiteil (5; 12; 22), welches die Ringwand (8, 11) mit dem zweiten starren Bauteil (4; 8'; 14; 25, 28) verbindet, einer ersten Flüssigkeit enthaltenen Kammer ($R_1$), begrenzt durch die beiden Platten und den ringförmigen Gummiteil (5; 12; 22), einer zweiten Flüssigkeit enthaltenden Kammer ($R_2$), begrenzt von einem Gummikörper (6'; 16; 26), welcher über einen ersten verengten Durchlaß (7; 17; 27) in einer der Platten mit der ersten Kammer ($R_1$) in Verbindung steht, dadurch gekennzeichnet, daß sich im äußeren Umfang des ringförmigen Gummiteils (5; 12; 22) Ausnehmungen befinden, die in Verbindung mit der Ringwand (8, 11) zumindest zwei weitere Flüssigkeit enthaltende Kammern ($R_3$, $R_4$) bilden, welche ihrerseits über einen zweiten verengten Durchlaß (9; 19) miteinander in Verbindung stehen.

2. Schwingungsisolierende Vorrichtung nach Anspruch 1, dadurch gekennzeichnet, daß die Flüssigkeit enthaltenden Kammern mit einer nicht kompressiblen Flüssigkeit gefüllt sind.

0 0 4 2 7 6 1

# FIG.1
## PRIOR ART

# FIG.2

# FIG.3

1

**FIG. 4**

**FIG. 5**

**FIG. 6**

**FIG. 7**

## FIG. 8

## FIG. 9